# DEMANDE DE BREVET EUROPEEN

(11) **EP 4 194 130 A1**
(43) Date de publication de la demande: **14.06.2023**
(21) Numéro de dépôt: 21213881.2
(22) Date de dépôt: 10.12.2021
(51) Int. Cl.: B23H 7/10

(54) **PROCÉDÉ ET DISPOSITIF POUR USINAGE OPTIMISÉ PAR ÉLÉCTROÉROSION À FIL**

(71) Demandeur: THERMOCOMPACT, 74370 Epagny Metz-Tessy (FR); GF Machining Solutions Services SA, 1217 Meyrin (CH)
(72) Inventeur: LY, Michel, F-74000 ANNECY (FR); LAVAZAIS, Bertrand, F-01710 THOIRY (FR)
(74) Mandataire: Cabinet Poncet

(57) **Abrégé**

Procédé d'usinage par électroérosion sur une machine d'électroérosion à fil au moyen d'un fil d'électroérosion conditionné sur une bobine munie d'un support de données d'identification (11) portant des données embarquées d'identification (ME) dudit fil d'électroérosion et des données embarquées de contrôle (CE) liées par une fonction de contrôle (F) aux données embarquées d'identification (ME),
- des paramètres spécifiques d'usinage optimisé (PSP), et la fonction de contrôle (F), sont préalablement enregistrés dans la machine d'électroérosion,
- la machine d'électroérosion à fil reçoit du support de données d'identification (11) des données lues de contrôle (CL) et des données lues d'identification (ML),
- la machine d'électroérosion recherche si les données lues d'identification (ML) et les données lues de contrôle (CL) sont liées par la fonction de contrôle (F),
- si et seulement si les données lues d'identification (ML) et les données lues de contrôle (CL) sont liées par ladite fonction de contrôle (F), la machine d'électroérosion provoque ou autorise l'usinage en fonction desdits paramètres spécifiques d'usinage optimisé (PSP).

## Description

### DOMAINE TECHNIQUE DE L'INVENTION

La présente invention concerne les dispositifs d'usinage par électroérosion à fil, dans lesquels un fil métallique continu à faible diamètre, dévidé d'une bobine sur laquelle il est conditionné, traverse dans une machine d'électroérosion une zone d'usinage emplie d'un diélectrique approprié. Dans la zone d'usinage, un tronçon du fil est tenu par des guidages à proximité d'une pièce à usiner qui est elle-même conductrice de l'électricité. Un générateur de courant électrique est connecté entre le fil et la pièce à usiner, produisant des arcs électriques entre le fil et la pièce à usiner. Les arcs électriques provoquent l'usure du fil et de la pièce. Pour compenser l'usure du fil, celui-ci est déplacé en permanence selon sa direction longitudinale dans la zone d'usinage. En suivant l'usure réalisée sur la pièce, le fil est progressivement déplacé vers la pièce par la machine d'électroérosion, réalisant ainsi sur la pièce à usiner une découpe par enlèvement de matière.

Les caractéristiques de performance de l'usinage réalisé par électroérosion à fil dépendent de nombreux paramètres, et notamment :
- des paramètres d'usinage, déterminés par la machine d'électroérosion, pouvant comprendre la puissance électrique délivrée par le générateur de courant électrique, la vitesse de déplacement longitudinal du fil, la tension mécanique longitudinale appliquée sur le fil dans la zone d'usinage, l'agitation du diélectrique dans la zone d'usinage, le décalage fonctionnel, généralement désigné par « offset », entre le fil et la pièce à usiner,
- des paramètres de structure ou de qualité du fil lui-même, pouvant comprendre la forme du fil, sa longueur, sa provenance, les contraintes qu'il a subies depuis sa fabrication, la puissance électrique que peut supporter le fil sans se rompre pendant l'usinage, la structure et la composition du fil lui-même, la tension mécanique que le fil peut supporter sans se rompre, les caractéristiques mécaniques du fil qui procurent une plus ou moins grande facilité d'introduction du fil dans la zone d'usinage et dans les guidages de la machine d'électroérosion en début d'usinage,
- des paramètres de structure ou de qualité de la pièce à usiner, pouvant comprendre la forme de la pièce, la structure et la composition de la pièce elle-même.

En fonction de ces paramètres, l'enlèvement de matière sur la pièce à usiner peut être plus ou moins rapide, caractérisé par une vitesse d'usinage ou vitesse de pénétration du fil dans la pièce à usiner.

En fonction de ces paramètres, l'usinage réalisé peut être plus ou moins précis, caractérisé par une précision de la découpe réalisée sur la pièce.

Ou encore, en fonction de ces paramètres, l'usinage réalisé peut être caractérisé par un état de surface des faces découpées de la pièce ainsi obtenue.

Généralement, lors d'un usinage d'une pièce à usiner avec un type particulier de fil d'électroérosion, l'utilisateur est guidé par la machine dans la sélection des paramètres d'usinage appropriés à utiliser par la machine d'électroérosion afin d'obtenir une ou plusieurs caractéristiques particulières de performance de l'usinage. Les ensembles de paramètres d'usinage sont déterminés par le fabricant de la machine d'électroérosion, pour une multitude de conditions d'usinage. L'utilisateur expert peut en principe choisir des paramètres d'usinage appropriés ou modifier les paramètres d'usinage qui lui sont proposés par la machine afin d'améliorer les performances de l'usinage.

Toutefois, pour obtenir une réelle optimisation des caractéristiques particulières de performance de l'usinage obtenu avec un type particulier de fil d'électroérosion, il apparaît nécessaire d'effectuer au préalable un très grand nombre d'essais d'usinage en faisant varier les paramètres d'usinage, les objectifs d'usinage, et les pièces à usiner jusqu'à obtenir un ensemble de paramètres spécifiques d'usinage optimisé. Cela constitue une première difficulté.

Ensuite, si l'on réalise un usinage en utilisant le même ensemble de paramètres spécifiques d'usinage optimisé mais avec un fil d'électroérosion seulement légèrement différent, l'expérience montre que les résultats d'usinage obtenus sont décevants, et sont loin d'être optimisés. Cela constitue une seconde difficulté.

Il en résulte que, pour obtenir une réelle optimisation des caractéristiques particulières de performance de l'usinage, il convient que la machine d'électroérosion associe de façon certaine à un fil d'électroérosion les paramètres d'usinage optimisé qui lui sont spécifiques et qui ont donné des résultats optimisés à l'issue des nombreux essais préalables.

La machine d'électroérosion doit pour cela d'une part connaître, de façon certaine et sans risque d'erreur, le type de fil d'électroérosion que l'utilisateur a chargé en vue de l'usinage, et doit d'autre part comporter un enregistrement de l'ensemble des paramètres spécifiques d'usinage optimisé de ce type de fil d'électroérosion.

Lorsque l'utilisateur introduit lui-même dans la machine d'électroérosion des données d'identification du fil d'électroérosion et le choix des paramètres d'usinage, les erreurs sont possibles, notamment par saisie erronée, ou par lecture erronée, ce qui ne permet pas de garantir l'obtention du résultat optimisé d'usinage.

Dans le document WO 2017/056045 A1, on a proposé d'automatiser l'introduction des données d'identification du fil d'électroérosion dans la machine d'électroérosion. Le fil d'électroérosion est pour cela conditionné sur une bobine qui elle-même comporte une radio-étiquette apte à communiquer, généralement à une fréquence de 13.56 MHz, avec un dispositif lecteur de données associé à la machine d'électroérosion. La machine d'électroérosion peut alors adapter elle-même les paramètres d'usinage en tenant compte des données d'identification provenant de la radio-étiquette.

Toutefois, l'expérience a montré que les machines d'électroérosion génèrent des perturbations électromagnétiques qui peuvent gêner la bonne lecture des données d'identification présentes sur la radio-étiquette. La fréquence de 13.56 MHz peut être brouillée par certains générateurs d'électroérosion de la machine d'électroérosion qui utilise le fil ou de machines d'électroérosion voisines, de sorte que des erreurs de lecture peuvent exister en dépit des protocoles de communication utilisés.

Les protocoles de transmission de données peuvent certes détecter des erreurs entre un émetteur et une machine d'électroérosion. Par contre, ils ne peuvent pas détecter si une donnée erronée d'identification a été écrite précédemment. Une telle erreur peut par exemple consister dans une écriture erronée due à une erreur du logiciel d'une machine d'électroérosion elle-même lors d'une utilisation antérieure de la bobine, ce qui est courant. Un autre exemple est une erreur d'écriture produite lors d'une manipulation (stockage, déstockage, pesée...) de la bobine avant son installation sur la machine d'électroérosion.

Si l'on envisage en alternative d'enregistrer les données d'identification du fil d'électroérosion sous forme optique sur une étiquette portée par la bobine, par exemple sous forme de code-barres ou de code QR, les perturbations électromagnétiques n'ont pas d'effet. Par contre, comme les machines d'électroérosion utilisent de l'eau ou de l'huile comme liquide diélectrique dans la zone d'usinage, des projections de liquide constituent d'autres types de perturbations qui peuvent gêner la bonne lecture optique des données présentes sur l'étiquette. En outre, une étiquette optique présente toujours un risque de dégradation lors du transport de la bobine jusqu'à son lieu d'utilisation. Et il persiste le risque qu'une donnée erronée d'identification ait été écrite précédemment

On comprendra qu'une lecture erronée des données d'identification du fil d'électroérosion, ou la présence de données d'identification erronées, peuvent conduire, par l'application de paramètres d'usinage inappropriés, à la rupture du fil d'électroérosion, ou à des résultats d'usinage décevants.

### EXPOSE DE L'INVENTION

Un problème proposé par la présente invention est d'éviter les inconvénients des procédés et dispositifs connus d'usinage par électroérosion à fil, et d'éviter en particulier les erreurs d'identification des fils d'électroérosion chargés sur les machines d'électroérosion en vue des usinages.

Un autre problème proposé par l'invention est de garantir l'obtention d'un usinage le plus satisfaisant possible lors de l'utilisation d'un fil d'électroérosion sur une machine d'électroérosion à fil. Il s'agit alors de limiter les conséquences d'une éventuelle erreur d'enregistrement ou de lecture, c'est-à-dire d'obtenir un résultat d'usinage optimal, que la bobine de fil ait été identifiée avec certitude ou non.

Un autre objectif de l'invention est d'assurer qu'un type particulier de fil soit utilisé en combinaison avec une technologie particulière, et vice versa, afin d'obtenir des résultats d'usinage normés.

A cet égard, l'invention vise d'une part à garantir de façon automatique l'obtention d'un usinage optimisé chaque fois qu'un type particulier de fil d'électroérosion, ayant donc une constitution et/ou des caractéristiques particulières, peut être associé de façon certaine dans la machine d'électroérosion à des paramètres d'usinage qui lui sont spécifiques et qui ont donné des résultats optimisés lors d'essais préalables.

En complément, l'invention peut viser d'autre part à garantir de façon automatique l'obtention d'un usinage le moins dégradé possible lorsque le fil d'électroérosion ne peut pas être associé de façon certaine dans la machine d'électroérosion à des paramètres d'usinage spécifiques qui ont donné des résultats optimisés lors de nombreux essais préalables.

Pour atteindre ces objets ainsi que d'autres, selon un premier aspect, l'invention propose un procédé d'usinage par électroérosion sur une machine d'électroérosion à fil au moyen d'un fil d'électroérosion conditionné sur une bobine à laquelle est associé un support de données d'identification portant des données embarquées d'identification dudit fil d'électroérosion, dans lequel
(a) la machine d'électroérosion à fil reçoit du support de données d'identification des données lues d'identification représentatives des données embarquées d'identification contenues dans le support de données d'identification,
(b) la machine d'électroérosion à fil adapte les paramètres d'usinage en tenant compte notamment des données lues d'identification provenant du support de données d'identification de la bobine utilisée pour l'usinage,
et dans lequel :
- des paramètres spécifiques d'usinage optimisé, et une fonction de contrôle, sont préalablement enregistrés dans des moyens de mémorisation de la machine d'électroérosion,
- des données embarquées de contrôle sont préalablement déterminées de façon à être liées par la fonction de contrôle aux données embarquées d'identification du fil d'électroérosion, et sont portées sur le support de données d'identification ;
avant l'étape (b) :
- la machine d'électroérosion à fil reçoit du support de données d'identification des données lues de contrôle,
- la machine d'électroérosion recherche si les données lues d'identification et les données lues de contrôle sont liées par la fonction de contrôle,
- si et seulement si les données lues d'identification et les données lues de contrôle sont liées par ladite fonction de contrôle, la machine d'électroérosion provoque ou autorise l'usinage en fonction desdits paramètres spécifiques d'usinage optimisé.

Dans la présente description et dans les revendications, l'expression « associé » signifie que la bobine et le support de données d'identification sont distribués de façon à être utilisables conjointement par la machine d'électroérosion. L'utilisateur dispose de la bobine pour la placer sur la machine d'électroérosion, et dispose du support de données d'identification pour qu'il soit lu par la machine d'électroérosion. Par exemple la bobine et le support de données d'identification peuvent être conditionnés ensemble : le support de données d'identification peut être fixé (par exemple collé) sur un flasque de la bobine, ou sur un sachet contenant la bobine, ou fixé ou placé dans un conteneur qui contient la bobine.

De préférence, le procédé d'usinage par électroérosion est en outre tel que :
- des paramètres standards d'usinage sont préalablement enregistrés dans les moyens de mémorisation de la machine d'électroérosion,
- si la machine d'électroérosion détermine que les données lues d'identification et les données lues de contrôle ne sont pas liées par ladite fonction de contrôle, la machine d'électroérosion provoque ou autorise l'usinage en fonction desdits paramètres standards d'usinage.

Dans tous les cas, il peut être avantageux de prévoir que :
- lors de la détermination des données embarquées de contrôle, on applique la fonction de contrôle aux données embarquées d'identification du fil d'électroérosion,
- après réception des données lues de contrôle, la machine d'électroérosion applique la fonction de contrôle aux données lues d'identification pour en déduire des données de vérification, et la machine d'électroérosion compare auxdites données de vérification les données lues de contrôle reçues du support de données d'identification,
- si les données de vérification sont identiques aux données lues de contrôle, la machine d'électroérosion considère que les données lues d'identification et les données lues de contrôle sont liées par ladite fonction de contrôle.

En alternative, il peut être avantageux de prévoir que :
- lors de la détermination des données embarquées de contrôle, on applique la fonction de contrôle aux données embarquées d'identification du fil d'électroérosion,
- après réception des données lues de contrôle, la machine d'électroérosion applique la fonction réciproque de la fonction de contrôle aux données embarquées de contrôle pour en déduire des données de vérification, et la machine d'électroérosion compare auxdites données de vérification les données lues d'identification reçues du support de données d'identification,
- si les données de vérification sont identiques aux données lues d'identification, la machine d'électroérosion considère que les données lues d'identification et les données lues de contrôle sont liées par ladite fonction de contrôle.

La fonction de contrôle peut avantageusement être une fonction de cryptage à clé privée de cryptage.

Le support de données d'identification peut être une étiquette optique sur laquelle les données embarquées d'identification et les données embarquées de contrôle sont portées sous forme de code-barres, ou de code QR, ou d'autre image codée. En alternative, plus avantageusement, le support de données d'identification peut être une radio-étiquette dans laquelle sont enregistrées sous forme numérique les données embarquées d'identification et les données embarquées de contrôle.

Selon un second aspect, l'invention propose une machine d'usinage par électroérosion à fil, adaptée pour la mise en œuvre du procédé d'usinage ci-dessus, dans laquelle :
- la machine d'usinage par électroérosion à fil est associée à un dispositif lecteur de données, apte à lire des données embarquées d'identification portées par un support de données d'identification associé à une bobine sur laquelle est conditionné le fil, et apte à transmettre à la machine d'usinage par électroérosion à fil les données lues d'identification,
- le dispositif lecteur de données est également apte à lire les données embarquées de contrôle portées par le support de données d'identification de la bobine, et à les transmettre à la machine d'usinage par électroérosion à fil,
- la machine d'usinage par électroérosion à fil comporte des moyens de mémorisation, dans lesquels sont enregistrés des paramètres spécifiques d'usinage optimisé et une fonction de contrôle,
- la machine d'usinage par électroérosion à fil comporte des moyens de reconnaissance de fils d'électroérosion, comportant des moyens de calcul et un programme informatique enregistré comportant une séquence de reconnaissance apte à vérifier si les données lues d'identification et les données lues de contrôle sont liées par ladite fonction de contrôle,
- la machine d'usinage par électroérosion à fil comporte des moyens de commande et un programme informatique enregistré comportant une séquence de commande apte à provoquer ou autoriser l'usinage en fonction desdits paramètres spécifiques d'usinage optimisé si et seulement si les données lues d'identification et les données lues de contrôle sont liées par la fonction de contrôle.

Selon un troisième aspect, l'invention propose une bobine de fil pour usinage par électroérosion, adaptée pour la mise en oeuvre du procédé d'usinage ci-dessus, à laquelle est associé un support de données d'identification dont les données peuvent être lues par un dispositif lecteur de données associé à une machine d'usinage par électroérosion à fil, le support de données d'identification portant des données embarquées d'identification du fil, dans laquelle le support de données d'identification porte en outre des données embarquées de contrôle qui sont liées aux données embarquées d'identification par une fonction de contrôle.

De préférence, dans le support de données d'identification, la fonction de contrôle est une fonction de cryptage à clé privée de cryptage.

Le support de données d'identification peut être une étiquette optique sur laquelle les données embarquées d'identification et les données embarquées de contrôle sont portées sous forme de code-barres, ou de code QR, ou d'autre image codée. En alternative, le support de données d'identification peut être une radio-étiquette dans laquelle sont enregistrées sous forme numérique les données embarquées d'identification et les données embarquées de contrôle.

Selon un quatrième aspect, l'invention propose un dispositif adapté pour la mise en œuvre du procédé d'usinage par électroérosion à fil d'électroérosion. Un tel dispositif comprend :
- une machine d'usinage par électroérosion à fil,
- un fil d'électroérosion conditionné sur une bobine,
- un support de données d'identification, associé à la bobine et accessible pour la lecture de données qu'il supporte,
- des données embarquées d'identification dudit fil, portées par le support de données d'identification,
- un dispositif lecteur de données, associé à la machine d'usinage par électroérosion à fil, apte à lire les données embarquées d'identification portées par le support de données d'identification de la bobine, et apte à transmettre à la machine d'usinage par électroérosion à fil les données lues d'identification, dans lequel :
- des données embarquées de contrôle sont également portées sur le support de données d'identification,
- le dispositif lecteur de données est également apte à lire les données embarquées de contrôle portées par le support de données d'identification de la bobine, et à transmettre à la machine d'usinage par électroérosion à fil les données lues de contrôle,
- la machine d'usinage par électroérosion comporte des moyens de mémorisation, dans lesquels sont enregistrés des paramètres spécifiques d'usinage optimisé et une fonction de contrôle,
- la machine d'usinage par électroérosion comporte des moyens de reconnaissance de fils d'électroérosion, comportant des moyens de calcul et un programme informatique enregistré comportant une séquence de reconnaissance apte à vérifier si les données lues d'identification et les données lues de contrôle sont liées par ladite fonction de contrôle,
- la machine d'usinage par électroérosion comporte des moyens de commande et un programme informatique enregistré comportant une séquence de commande apte à provoquer ou autoriser l'usinage en fonction desdits paramètres spécifiques d'usinage optimisé si et seulement si les données lues d'identification et les données lues de contrôle sont liées par la fonction de contrôle.

De préférence, le dispositif d'usinage par électroérosion est tel que :
- des paramètres standards d'usinage sont également enregistrés dans les moyens de mémorisation de la machine d'électroérosion,
- si les données lues d'identification et les données lues de contrôle ne sont pas liées par ladite fonction de contrôle, la séquence de commande de la machine d'électroérosion provoque ou autorise l'usinage en fonction desdits paramètres standards d'usinage.

Dans un tel dispositif d'usinage par électroérosion, le support de données d'identification peut avantageusement être une radio-étiquette dans laquelle sont enregistrées sous forme numérique les données embarquées d'identification et les données embarquées de contrôle, le dispositif lecteur de données étant un dispositif de communication radiofréquence apte à communiquer avec la radio-étiquette.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :

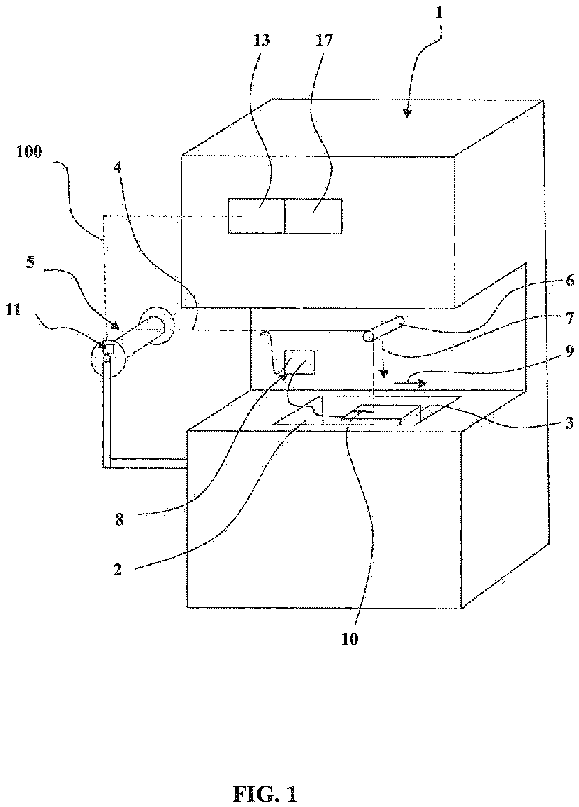

[Fig.1] la figure 1 est une vue schématique d'une machine d'électroérosion en cours d'usinage d'une pièce au moyen d'un fil conditionné sur une bobine selon un mode de réalisation de la présente invention ;

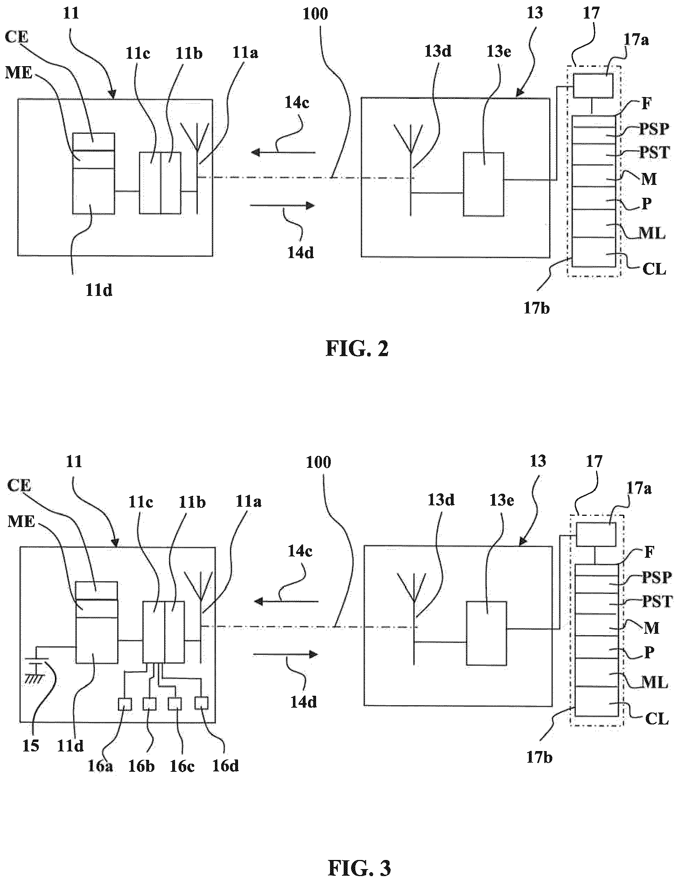

[Fig.2] la figure 2 illustre schématiquement un support de données d'identification de type radio-étiquette passive selon un premier mode de réalisation de la présente invention, communiquant par radiofréquence avec un dispositif lecteur de données associé à ou implémenté dans une machine d'électroérosion ;

[Fig.3] la figure 3 illustre schématiquement un support de données d'identification de type radio-étiquette active ou semi-active selon un second mode de réalisation de la présente invention, communiquant par radiofréquence avec un dispositif lecteur de données associé à ou implémenté dans une machine d'électroérosion.

### DESCRIPTION DES MODES DE REALISATION PREFERES

On considère tout d'abord la figure 1, illustrant un dispositif d'usinage par électroérosion à fil selon un mode de réalisation de la présente invention. Le dispositif d'usinage comprend de façon générale une machine d'électroérosion à fil 1 dans laquelle est prévue une zone d'usinage 2 remplie d'un diélectrique liquide approprié. La zone d'usinage 2 est conformée et structurée pour recevoir et maintenir une pièce à usiner 3. Un fil d'électroérosion 4, conditionné sur une bobine 5, est dévidé de la bobine 5 en passant sur des guidages 6 de la machine d'électroérosion 1 qui le maintiennent en position et qui l'entraînent en défilement longitudinal selon une vitesse de défilement appropriée, comme illustré par la flèche 7. Le fil d'électroérosion 4 traverse la zone d'usinage 2, dans laquelle il est maintenu à proximité de la pièce à usiner 3 selon un décalage fonctionnel approprié.

La machine d'électroérosion à fil 1 comporte en outre un générateur de courant électrique 8, connecté entre le fil d'électroérosion 4 et la pièce à usiner 3, pour produire des arcs électriques entre le fil d'électroérosion 4 et la pièce à usiner 3.

Lors du fonctionnement, les arcs électriques provoquent l'usure du fil d'électroérosion 4 et de la pièce à usiner 3. Le défilement longitudinal 7 permanent du fil d'électroérosion 4 dans la zone d'usinage 2 permet d'éviter la rupture du fil d'électroérosion 4 par suite de l'usure provoquée par les arcs électriques sur le fil. Par contre, l'usure provoquée sur la pièce 3 par les arcs électriques constitue un enlèvement de matière qui permet, par déplacement progressif relatif du fil d'électroérosion 4 vers la pièce 3, par exemple comme illustré par la flèche 9, de réaliser une découpe 10 sur la pièce à usiner 3.

Dans la zone d'usinage 2, le fil d'électroérosion 4 doit être tendu par traction mécanique longitudinale assurée par les guidages 6, afin de conserver une forme rectiligne et une position géométrique stable et définie, qui garantissent une bonne géométrie de la découpe 10 effectuée sur la pièce à usiner 3.

En début d'usinage, il est nécessaire d'introduire l'extrémité libre du fil d'électroérosion 4 dans les guidages 6 et dans la zone d'usinage 2. Généralement, la machine d'électroérosion 1 comprend une séquence de fonctionnement assurant l'introduction automatique du fil. Toutefois, cela nécessite que le fil d'électroérosion 4 présente des propriétés satisfaisantes de rectitude et de rigidité pour que le guidage de son extrémité libre puisse être assuré lorsque les guidages 6 ne tiennent le fil que par des tronçons intermédiaires à l'écart de l'extrémité libre du fil.

Un circuit électronique de commande 17 pilote les organes actifs de la machine d'électroérosion 1, de façon à régler les paramètres d'usinage tels que la puissance électrique délivrée par le générateur de courant électrique 8, la vitesse de déplacement longitudinal 7 du fil, la tension mécanique longitudinale appliquée sur le fil dans la zone d'usinage 2, l'agitation du diélectrique dans la zone d'usinage 2, le décalage fonctionnel entre le fil 4 et la pièce à usiner 3.

Selon l'invention, le dispositif d'usinage comprend en outre des moyens d'identification permettant l'identification automatique du fil d'électroérosion 4 conditionné sur la bobine 5, et des moyens de commande optimisée adaptés pour, en fonction du fil d'électroérosion 4 tel qu'identifié, autoriser ou provoquer un pilotage des organes fonctionnels de la machine d'électroérosion 1 de façon à permettre un usinage optimisé de la pièce à usiner 3 par ce fil d'électroérosion 4.

Dans le mode de réalisation illustré sur les figures 1 à 3, les moyens d'identification comprennent en particulier un support de données d'identification 11, fixé sur un flasque de la bobine 5, portant d'une part des données embarquées d'identification ME du fil d'électroérosion 4, et portant d'autre part des données embarquées de contrôle CE qui sont liées par une fonction de contrôle F aux données embarquées d'identification ME, comme cela sera expliqué ultérieurement.

Le support de données d'identification 11 coopère avec un dispositif lecteur de données 13 associé à la machine d'électroérosion à fil 1, par l'intermédiaire d'une liaison sans fil 100 permettant la communication entre le support de données d'identification 11 et le dispositif lecteur de données 13.

Les figures 2 et 3 illustrent, à titre d'exemple, deux modes de réalisation du dispositif d'identification selon l'invention.

Sur la figure 2, le support de données d'identification 11 est une radio-étiquette passive, comprenant une antenne 11a, un circuit d'alimentation 11b apte à prélever une partie de l'énergie électrique captée par l'antenne 11a pour générer une tension d'alimentation alimentant les autres circuits électroniques de la radio-étiquette. Un circuit électronique de traitement 11c reçoit les signaux électroniques de requête 14c captés par l'antenne 11a, communique avec un circuit de mémorisation 11d contenant les données embarquées d'identification ME et les données embarquées de contrôle CE, et génère, en fonction des signaux électroniques de requête 14c, des signaux électroniques de réponse 14d qu'il émet par l'antenne 11a. Par exemple, sur réception de signaux électroniques de requête 14c requérant la communication d'une identification, la radio-étiquette passive 11 renvoie des signaux de réponse 14d contenant lesdites données embarquées d'identification ME et lesdites données embarquées de contrôle CE.

Dans ce cas, le dispositif lecteur de données 13 est un dispositif actif, émetteur de radiofréquences qui permettent d'activer à distance la radio-étiquette 11. Il comprend une antenne 13d et un circuit électronique 13e permettant d'une part de générer les signaux de requête 14c à transmettre par l'antenne 13d à la radio-étiquette 11, et d'autre part de traiter les signaux de réponse 14d provenant de la radio-étiquette 11 et captés par l'antenne 13d. La liaison sans fil 100 est une liaison radio.

Un exemple de réalisation de radio-étiquette et de dispositif lecteur de données est décrit dans le document US 4,724,427.

Sur la figure 3 le support de données d'identification 11 est une radio-étiquette active ou semi-active, dans laquelle on retrouve les principaux éléments du mode de réalisation de la figure 2, et notamment : une antenne 11a, un circuit d'alimentation 11b, un circuit électronique de traitement 11c, un circuit de mémorisation 11d, ayant les mêmes fonctions que celles du mode de réalisation de la figure 2. Sur la figure 3, le support de données d'identification 11 comprend en outre une source d'énergie électrique embarquée 15, capable d'alimenter en énergie électrique, en remplacement ou en complément de l'énergie électrique captée par l'antenne 11a, les circuits électroniques de traitement 11c et de mémorisation 11d.

Dans ce cas, le support de données d'identification 11 comprend en outre des capteurs embarqués, par exemple quatre capteurs embarqués 16a, 16b, 16c, 16d fournissant respectivement au circuit électronique de traitement 11c des signaux image de l'accélération subie par la bobine 5 portant le fil 4 et le support de données d'identification 11, des signaux image de la température ambiante, des signaux image de l'hygrométrie ambiante, des signaux image du poids de la bobine 5.

Le circuit électronique de traitement 11c est piloté par un programme informatique embarqué comportant une séquence de mémorisation pour scruter et mémoriser, dans le circuit de mémorisation 11d, les signaux produits par les capteurs embarqués 16a, 16b, 16c et 16d.

Dans ce mode de réalisation de la figure 3, le dispositif lecteur de données 13 est également un dispositif actif émetteur de radiofréquences qui permettent éventuellement d'activer à distance la radio-étiquette 11, et comprenant une antenne 13d et un circuit électronique 13e pour générer d'une part des signaux de requête 14c envoyés à la radio-étiquette 11, et pour traiter d'autre part les signaux de réception 14d provenant de la radio-étiquette 11 et captés par l'antenne 13d. La liaison sans fil 100 est une liaison radio.

Le circuit de commande 17 de la machine d'électroérosion 1 inclut des moyens de calcul 17a tels qu'un processeur, et des moyens de mémorisation 17b.

Les moyens de mémorisation 17b du circuit de commande 17 contiennent des ensembles de paramètres d'usinage, chaque ensemble de paramètres d'usinage étant destiné à être utilisé de préférence pour un type particulier d'usinage avec un type particulier de fil d'usinage par électroérosion. Notamment, les moyens de mémorisation 17b du circuit de commande 17 contiennent un ou plusieurs ensembles de paramètres spécifiques d'usinage optimisé PSP qui ont chacun été déterminés à l'issue d'essais d'usinage préalables réalisés avec un même type de machine d'usinage par électroérosion 1 en utilisant un même type de fil d'électroérosion M. Dans les moyens de mémorisation 17b du circuit de commande 17, les ensembles de paramètres spécifiques d'usinage optimisé PSP sont associés à tout ou partie des données d'identification du fil d'électroérosion M correspondant.

Les moyens de mémorisation 17b du circuit de commande 17 contiennent en outre un programme informatique P qui est mis en oeuvre par les moyens de calcul 17a, permettant notamment de piloter les organes actifs de la machine d'électroérosion 1 en fonction des ensembles de paramètres d'usinage choisis, pour réaliser un usinage d'une pièce à usiner 3.

Le programme informatique P du circuit de commande 17 de la machine d'électroérosion 1 comprend au moins une séquence de téléchargement des données embarquées d'identification ME et des données embarquées de contrôle CE portées par le support de données d'identification 11. La séquence de téléchargement pilote le dispositif lecteur de données 13 pour qu'il génère des signaux de requête 14c et les envoie au support de données d'identification 11, lequel lui renvoie alors un message 14d. Le message 14d tel que reçu par le dispositif lecteur de données 13, après d'éventuelles perturbations optiques ou électromagnétiques, parvient au circuit de commande 17 sous la forme de données lues d'identification ML et sous la forme de données lues de contrôle CL.

Le programme informatique P du circuit de commande 17 de la machine d'électroérosion 1 comprend au moins une séquence d'adaptation des paramètres d'usinage, tenant compte notamment des données lues d'identification ML et des données lues de contrôle CL provenant du support de données d'identification 11 de la bobine 5 utilisée pour l'usinage. De la sorte, le dispositif selon l'invention permet d'automatiser l'adaptation des paramètres d'électroérosion dans la machine d'électroérosion à fil 1 en fonction des capacités propres du fil d'électroérosion 4 utilisé. Par exemple, la séquence d'adaptation peut modifier ou limiter les paramètres de tension mécanique du fil d'électroérosion 4 dans la zone d'usinage 2, d'intensité du courant électrique parcourant le fil d'électroérosion 4 dans la zone d'usinage 2, de vitesse de déplacement longitudinal 7 du fil d'électroérosion 4 dans la zone d'usinage 2, d'agitation du diélectrique dans la zone d'usinage 2, de déplacement transversal 9 du fil d'électroérosion 4 dans la zone d'usinage 2, de maintien d'un décalage fonctionnel entre le fil d'électroérosion 4 et la pièce à usiner 3.

Le téléchargement des données relatives au fil d'électroérosion 4 peut être direct, par simple interrogation du support de données d'identification 11 si celui-ci contient l'intégralité des données nécessaires.

En alternative, le téléchargement des données relatives au fil d'électroérosion 4 peut être en partie indirect, la séquence de téléchargement comprenant alors le téléchargement d'au moins l'identité du fabricant du fil 4 et le numéro de série de la bobine 5 par interrogation du support de données d'identification 11, et une séquence de téléchargement automatique de données relatives à la bobine 5 de fil 4 depuis un serveur informatique du fabricant en interrogeant le serveur informatique du fabricant par Internet au moyen des informations sur l'identité du fabricant du fil 4 et du numéro de série de la bobine 5.

Selon la présente invention, le programme informatique P du circuit de commande 17 de la machine d'électroérosion 1 comprend une séquence particulière d'identification du fil d'électroérosion 4, laquelle procède à une identification plus rigoureuse du fil d'électroérosion 4, non seulement en tenant compte des données lues d'identification ML telles que reçues en provenance du support de données d'identification 11, mais également en tenant compte de la fonction de contrôle F mentionnée précédemment et en tenant compte des données lues de contrôle CL telles que reçues en provenance du support de données d'identification 11.

La fonction de contrôle F n'est ni enregistrée en clair, ni explicitée dans les informations portées par le support de données d'identification 11. Cette fonction de contrôle F est utilisée par le fournisseur du fil d'électroérosion 4 conditionné sur la bobine 5 pour générer les données embarquées de contrôle CE à partir des données embarquées d'identification ME. De la sorte, les données embarquées d'identification ME et les données embarquées de contrôle CE sont liées les unes aux autres par ladite fonction de contrôle F.

Par contre, la fonction de contrôle F est elle-même enregistrée dans des moyens de mémorisation 17b prévus dans le circuit de commande 17 de la machine d'usinage par électroérosion 1.

Sur le support de données d'identification 11, les données embarquées d'identification ME peuvent notamment être stockées sous forme d'une suite de signaux binaires (0 ou 1), c'est-à-dire sous forme d'un nombre entier naturel écrit en base 2. Selon un premier exemple particulièrement simple, proposé pour faciliter la compréhension de l'invention, une fonction de contrôle F peut alors être constituée par la fonction NOT, qui inverse chaque signal binaire des données embarquées d'identification ME : un signal binaire 0 des données embarquées d'identification ME devient un signal binaire 1 dans les données embarquées de contrôle CE, tandis qu'un signal binaire 1 des données embarquées d'identification ME devient un signal binaire 0 dans les données embarquées de contrôle CE.

Selon un second exemple, un peu plus complexe, une fonction de contrôle F peut donner le reste C de la division euclidienne des données embarquées d'identification ME par un nombre entier K constituant lui-même une clé privée de cryptage.

On peut par exemple choisir la clé K = 19. En appliquant cette fonction F à des données embarquées d'identification ME ayant pour valeur 99, les données embarquées de contrôle CE ont alors pour valeur 4 car 99 = 19 x 5 + 4.

Selon un troisième exemple, sur le support de données d'identification 11, les données embarquées d'identification ME peuvent être codées selon la norme informatique de codage ASCII dans une chaîne de caractères. La fonction de contrôle F peut être la fonction de cryptage connue sous le nom «aes-128-cbc », en faisant usage d'une clé de cryptage K privée pouvant elle-même être codée selon la norme informatique de codage ASCII. L'utilisation de cette fonction peut être aisément mise en œuvre par des calculs effectués sur le site Internet : https://encode-decode.com/aes-128-cbc-encrypt-online.

On peut par exemple choisir la clé K = « Thermocompact ». En appliquant cette fonction F de cryptage à des données embarquées d'identification ME constituées de la suite « Fil Thermo SA 900 N/mm2 0.25mm produit le 13/08/2020 sous le numéro 123456789 », on obtient comme données embarquées de contrôle CE : « mUcNi+tUBbdONTrx8TmY76nBrtaqx5Cf1RZKdMbVMjf+POZK+aHmLFqE09Fufs QC0bGC89bG9D5pUdb7DY+euaftyLyZQJrExo5GOKGuDcl= ».

À réception des données lues d'identification ML et des données lues de contrôle CL, la séquence d'identification du fil d'électroérosion 4 peut appliquer la fonction de contrôle F aux données lues d'identification ML pour générer ainsi des données de vérification V, et peut comparer entre elles les données de vérification V et les données lues de contrôle CL. En cas d'identité, la séquence d'identification considère que les données lues d'identification ML et les données lues de contrôle CL sont liées par ladite fonction de contrôle F, et qu'en conséquence les données lues d'identification ML sont identiques aux données embarquées d'identification ME, et que les données embarquées d'identification sont correctes.

En alternative, à réception des données lues d'identification ML et des données lues de contrôle CL, la séquence d'identification du fil d'électroérosion 4 peut appliquer la fonction réciproque F⁻¹ de la fonction de contrôle F aux données lues de contrôle CL pour générer ainsi des données de vérification W, et peut comparer entre elles les données de vérification W et les données lues d'identification ML reçues du support de données d'identification 11. En cas d'identité, la séquence d'identification considère que les données lues d'identification ML et les données lues de contrôle CL sont liées par ladite fonction de contrôle F, et qu'en conséquence les données lues d'identification ML sont identiques aux données embarquées d'identification ME, et que les données embarquées d'identification sont correctes.

Un intérêt de l'utilisation d'une fonction F de contrôle par cryptage à clé privée est de réduire encore considérablement le risque d'erreur d'identification du fil d'électroérosion. En effet, dans le troisième exemple ci-dessus, si une erreur a été introduite dans les données embarquées d'identification ME, ou si une perturbation de transmission a introduit une légère modification entre les données embarquées d'identification ME et les données lues d'identification ML, alors les données de vérification V sont très différentes des données lues de contrôle CL, ce qui facilite la reconnaissance. En l'espèce, si la séquence «SA » des données embarquées d'identification ME ci-dessus a été modifiée en une séquence «SB » dans les données lues d'identification ML, en remplaçant seulement la lettre « A » par la lettre « B », alors les données de vérification V sont : « u3hROePgvtGCCG3Ji2XFKyREIPfJSB6ZnF23gn7KrK4NqOD7WuH8t9QargS1dA iOG52mCHcoqPACtkE3vcHXspFJ8f3uP5aKTUnKGaFZeXg= ». V et CL diffèrent complètement. On peut donc appliquer les paramètres spécifiques d'usinage optimisé PSP avec confiance lorsque les données de vérification V sont identiques aux données embarquées de contrôle CE.

Selon la présente invention, le programme informatique P du circuit de commande 17 de la machine d'électroérosion 1 comprend en outre une séquence particulière d'autorisation, selon laquelle la machine d'usinage par électroérosion 1 autorise ou provoque l'usinage avec le fil d'électroérosion 4 en appliquant des paramètres spécifiques d'usinage optimisé PSP si des conditions d'autorisation sont respectées.

Selon une première condition d'autorisation, la séquence d'identification doit avoir considéré que les données lues d'identification ML sont identiques aux données embarquées d'identification ME.

Selon une seconde condition d'autorisation, les données lues d'identification ML doivent correspondre aux données essentielles d'identification de l'un des types de fils d'électroérosion M répertoriés dans les moyens de mémorisation 17b prévus dans le circuit de commande 17 de la machine d'électroérosion 1.

Lorsque les première et seconde conditions d'autorisation sont remplies, la séquence particulière d'autorisation autorise ou provoque l'usinage avec le fil d'électroérosion 4 en appliquant les paramètres spécifiques d'usinage optimisé PSP préalablement enregistrés dans les moyens de mémorisation 17b prévus dans le circuit de commande 17.

L'identification du fil d'électroérosion 4 étant rendue certaine grâce aux moyens de contrôle mis en œuvre ci-dessus, l'utilisateur peut être certain de l'obtention d'un résultat d'usinage optimisé chaque fois que la machine d'électroérosion 1 provoque ou autorise de façon automatique l'usinage optimisé.

Il y a encore un intérêt à ce que le résultat d'un usinage ne soit pas trop dégradé lorsque la machine d'électroérosion 1 affecte automatiquement un autre ensemble de paramètres d'usinage pour l'utilisation d'un fil d'électroérosion 4 donné. En effet, on a pu constater que l'utilisation de paramètres d'usinage standards conduit à de meilleurs résultats d'usinage que l'utilisation de paramètres spécifiques d'usinage optimisé PSP avec un fil d'électroérosion 4 qui n'est pas prévu pour cela.

À titre d'exemple, avec le fil « SA » mentionné plus haut, on peut utiliser avec succès un décalage fonctionnel variable en finition, grâce à un jeu de paramètres optimisés, tandis qu'avec un fil « SB », de meilleurs résultats de finition sont obtenus avec un décalage fixe, c'est-à-dire avec un jeu de paramètres d'usinage standards.

Cela apparaît dans les résultats de mesure ci-après :
- en utilisant le fil « SA » avec des paramètres spécifiques d'usinage optimisé PSP pour ce fil « SA », la rugosité Ra obtenue dans le sens du fil est de 0.16 microns, et la rugosité dans le sens de la coupe est de 0.17 microns, de sorte que la pièce est jugée conforme ;
- en utilisant le fil « SB » avec les mêmes paramètres spécifiques d'usinage optimisé PSP du fil « SA », la rugosité Ra dans le sens du fil est de 0.17 microns tandis que la rugosité dans le sens de la coupe est de 0.20 microns, de sorte que la pièce est jugée non conforme ;
- en utilisant le fil « SA » avec des paramètres standards d'usinage, la rugosité Ra obtenue dans le sens du fil est de 0.19 microns, et la rugosité dans le sens de la coupe est de 0.20 microns, de sorte que la pièce est jugée conforme ;
- en utilisant le fil « SB » avec des paramètres standards d'usinage, la rugosité Ra obtenu dans le sens du fil et de 0.20 microns, et la rugosité dans le sens de la coupe est de 0.21 microns, de sorte que la pièce est jugée conforme.

Autrement dit, si on utilise le fil « SB » avec les paramètres spécifiques d'usinage optimisé PSP du fil « SA », on obtient une rugosité Ra dans le sens de la coupe qui est sensiblement plus élevée que dans le sens du fil, ce qui se voit à l'œil et qui est considéré comme non conforme.

Par contre, si on utilise le fil « SB » avec des paramètres standards d'usinage, la rugosité Ra moyenne est un peu plus forte, mais la rugosité Ra dans le sens de la coupe est proche de celle dans le sens du fil, de sorte que la pièce est jugée visuellement conforme.

Ainsi, en cas d'incertitude sur l'identification d'un fil d'électroérosion 4, il est préférable d'employer des jeux de paramètres standards d'usinage PST.

Pour cela, selon un mode de réalisation avantageux, les moyens de mémorisation 17b du circuit de commande 17 contiennent en outre un ou plusieurs ensembles de paramètres standards d'usinage PST qui ont chacun été déterminés à l'issue d'essais d'usinage préalables réalisés avec un même type de machine d'usinage par électroérosion 1 en utilisant plusieurs types de fil d'électroérosion M et en obtenant une qualité moyenne d'usinage satisfaisante.

Dans ce cas, lorsque l'une au moins des première et seconde conditions d'autorisation n'est pas remplie, la séquence particulière d'autorisation autorise ou provoque l'usinage avec le fil d'électroérosion 4 en appliquant les paramètres standards d'usinage PST préalablement enregistrés dans les moyens de mémorisation 17b prévus dans le circuit de commande 17. De la sorte, l'usinage effectué selon les paramètres standards d'usinage PST choisis de façon automatique par la machine d'électroérosion 1 n'est pas optimisé, mais est encore optimal, c'est à dire le moins dégradé possible.

En complément, considérant que l'utilisation des paramètres spécifiques d'usinage optimisé PSP avec un fil d'électroérosion 4 dont le type diffère de celui normalement prévu conduit à un résultat d'usinage qui est en général pire que le résultat d'usinage avec des paramètres d'usinage standard PST, l'invention prévoit, selon un mode de réalisation avantageux, de limiter ou d'interdire la lecture et la copie des fichiers de paramètres spécifiques d'usinage optimisé PSP enregistrés dans les moyens de mémorisation 17b de la machine d'électroérosion 1. À cet effet, le programme informatique P peut contenir une séquence de contrôle d'accès aux paramètres spécifiques d'usinage optimisé PSP, laquelle séquence de contrôle d'accès pouvant par exemple nécessiter la saisie d'un ou plusieurs codes secrets. On évite ainsi qu'un utilisateur tente de forcer manuellement l'utilisation de paramètres spécifiques d'usinage optimisé PSP dans l'espoir de réaliser un usinage optimisé avec un fil d'électroérosion 4 qui n'est pas prévu pour cela, et obtienne alors un usinage dégradé et défectueux.

La présente invention n'est pas limitée aux modes de réalisation qui ont été explicitement décrits, mais elle en inclut les diverses variantes et généralisations contenues dans le domaine des revendications ci-après.

## Revendications

1. 1 - Procédé d'usinage par électroérosion sur une machine d'électroérosion à fil (1) au moyen d'un fil d'électroérosion (4) conditionné sur une bobine (5) à laquelle est associé un support de données d'identification (11) portant des données embarquées d'identification (ME) dudit fil d'électroérosion (4), dans lequel
(a) la machine d'électroérosion à fil (1) reçoit du support de données d'identification (11) des données lues d'identification (ML) représentatives des données embarquées d'identification (ME) contenues dans le support de données d'identification (11),
(b) la machine d'électroérosion à fil (1) adapte les paramètres d'usinage en tenant compte notamment des données lues d'identification (ML) provenant du support de données d'identification (11) de la bobine utilisée pour l'usinage, **caractérisé en ce que** :
- des paramètres spécifiques d'usinage optimisé (PSP), et une fonction de contrôle (F), sont préalablement enregistrés dans des moyens de mémorisation (17b) de la machine d'électroérosion (1),
- des données embarquées de contrôle (CE) sont préalablement déterminées de façon à être liées par la fonction de contrôle (F) aux données embarquées d'identification (ME) du fil d'électroérosion (4), et sont portées sur le support de données d'identification (11),
et **en ce que**, avant l'étape (b) :
- la machine d'électroérosion à fil (1) reçoit du support de données d'identification (11) des données lues de contrôle (CL),
- la machine d'électroérosion (1) recherche si les données lues d'identification (ML) et les données lues de contrôle (CL) sont liées par la fonction de contrôle (F),
- si et seulement si les données lues d'identification (ML) et les données lues de contrôle (CL) sont liées par ladite fonction de contrôle (F), la machine d'électroérosion (1) provoque ou autorise l'usinage en fonction desdits paramètres spécifiques d'usinage optimisé (PSP).

2. 2 - Procédé d'usinage par électroérosion selon la revendication 1, **caractérisé en ce que** :
- des paramètres standards d'usinage (PST) sont préalablement enregistrés dans les moyens de mémorisation (17b) de la machine d'électroérosion à fil (1),
- si la machine d'électroérosion à fil (1) détermine que les données lues d'identification (ML) et les données lues de contrôle (CL) ne sont pas liées par ladite fonction de contrôle (F), la machine d'électroérosion à fil (1) provoque ou autorise l'usinage en fonction desdits paramètres standards d'usinage (PST).

3. 3 - Procédé d'usinage par électroérosion selon l'une des revendications 1 ou 2, **caractérisé en ce que** :
- lors de la détermination des données embarquées de contrôle (CE), on applique la fonction de contrôle (F) aux données embarquées d'identification (ME) du fil d'électroérosion (4),
- après réception des données lues de contrôle (CL), la machine d'électroérosion à fil (1) applique la fonction (F) aux données lues d'identification (ML) pour en déduire des données de vérification (V), et la machine d'électroérosion à fil (1) compare auxdites données de vérification (V) les données lues de contrôle (CL) reçues du support de données d'identification (11),
- si les données de vérification (V) sont identiques aux données lues de contrôle (CL), la machine d'électroérosion à fil (1) considère que les données lues d'identification (ML) et les données lues de contrôle (CL) sont liées par ladite fonction de contrôle (F).

4.- Procédé d'usinage par électroérosion selon l'une des revendications 1 ou 2, **caractérisé en ce que** :
- lors de la détermination des données embarquées de contrôle (CE), on applique la fonction de contrôle (F) aux données embarquées d'identification (ME) du fil d'électroérosion (4),
- après réception des données lues de contrôle (CL), la machine d'électroérosion à fil (1) applique la fonction réciproque (F⁻¹) de la fonction (F) aux données embarquées de contrôle (C) pour en déduire des données de vérification (W), et la machine d'électroérosion à fil (1) compare auxdites données de vérification (W) les données lues d'identification (ML) reçues du support de données d'identification (11),
- si les données de vérification (W) sont identiques aux données lues d'identification (ML), la machine d'électroérosion à fil (1) considère que les données lues d'identification (ML) et les données lues de contrôle (CL) sont liées par ladite fonction de contrôle (F).

5. 5 - Procédé d'usinage par électroérosion selon l'une quelconque des revendications 1 à 4, **caractérisé en ce que** la fonction de contrôle (F) est une fonction de cryptage à clé privée (K) de cryptage.

6. 6 - Procédé d'usinage par électroérosion selon l'une quelconque des revendications 1 à 5, **caractérisé en ce que** le support de données d'identification (11) est une étiquette optique sur laquelle les données embarquées d'identification (ME) et les données embarquées de contrôle (CE) sont portées sous forme de code-barres, ou de code QR, ou d'autre image codée, ou une radio-étiquette dans laquelle sont enregistrées sous forme numérique les données embarquées d'identification (ME) et les données embarquées de contrôle (CE).

7. 7 - Machine d'usinage par électroérosion à fil (1), pour la mise en œuvre d'un procédé selon l'une quelconque des revendications 1 à 6, dans laquelle :
- la machine d'usinage par électroérosion à fil (1) est associée à un dispositif lecteur de données (13), apte à lire des données embarquées d'identification (ME) portées par un support de données d'identification (11) associé à une bobine (5) sur laquelle est conditionné le fil (1), et apte à transmettre à la machine d'usinage par électroérosion à fil (1) les données lues d'identification (ML),
- le dispositif lecteur de données (13) est également apte à lire les données embarquées de contrôle (CE ) portées par le support de données d'identification (11) de la bobine (5), et à les transmettre à la machine d'usinage par électroérosion à fil (1),
- la machine d'usinage par électroérosion à fil (1) comporte des moyens de mémorisation (17b), dans lesquels sont enregistrés des paramètres spécifiques d'usinage optimisé (PSP) et une fonction de contrôle (F),
- la machine d'usinage par électroérosion à fil (1) comporte des moyens de reconnaissance de fils d'électroérosion, comportant des moyens de calcul (17a) et un programme informatique (P) enregistré comportant une séquence de reconnaissance apte à vérifier si les données lues d'identification (ML) et les données lues de contrôle (CL) sont liées par ladite fonction de contrôle (F),
- la machine d'usinage par électroérosion à fil (1) comporte des moyens de commande (17) et un programme informatique (P) enregistré comportant une séquence de commande apte à provoquer ou autoriser l'usinage en fonction desdits paramètres spécifiques d'usinage optimisé (PSP) si et seulement si les données lues d'identification (ML) et les données lues de contrôle (CL) sont liées par la fonction de contrôle (F).

8. 8 - Bobine (5) de fil (1) pour la mise en oeuvre d'un procédé d'usinage par électroérosion selon l'une quelconque des revendications 1 à 6, à laquelle est associé un support de données d'identification (11) dont les données peuvent être lues par un dispositif lecteur de données (13) associé à une machine d'usinage par électroérosion à fil (1), le support de données d'identification (11) portant des données embarquées d'identification (ME) du fil, **caractérisée en ce que** le support de données d'identification (11) porte en outre des données embarquées de contrôle (CE) qui sont liées aux données embarquées d'identification (ME) par une fonction de contrôle (F).

9. 9 - Bobine (5) de fil (1) pour usinage par électroérosion selon la revendication 8, **caractérisée en ce que** la fonction de contrôle (F) est une fonction de cryptage à clé privée (K) de cryptage.

10. 10 - Bobine (5) de fil (1) pour usinage par électroérosion selon l'une des revendications 8 ou 9, **caractérisée en ce que** le support de données d'identification (11) est une étiquette optique sur laquelle les données embarquées d'identification (ME) et les données embarquées de contrôle (CE) sont portées sous forme de code-barres, ou de code QR, ou d'autre image codée, ou une radio-étiquette dans laquelle sont enregistrées sous forme numérique les données embarquées d'identification (ME) et les données embarquées de contrôle (CE).

11. 11 - Bobine (5) de fil (1) pour usinage par électroérosion selon l'une quelconque des revendications 8 à 10, **caractérisée en ce que** le support de données d'identification (11) est fixé sur un flasque de la bobine (5), ou fixé sur un sachet contenant la bobine (5), ou fixé ou placé dans un conteneur qui contient la bobine (5)

12. 12 - Dispositif d'usinage par électroérosion à fil d'électroérosion (4), pour la mise en œuvre d'un procédé selon l'une quelconque des revendications 1 à 6, comprenant :
- une machine d'usinage par électroérosion à fil (1),
- un fil d'électroérosion (4) conditionné sur une bobine (5),
- un support de données d'identification (11), associé à la bobine (5) et accessible pour la lecture de données qu'il supporte,
- des données embarquées d'identification (ME) dudit fil, portées par le support de données d'identification (11),
- un dispositif lecteur de données (13), associé à la machine d'usinage par électroérosion à fil (1), apte à lire les données embarquées d'identification (ME) portées par le support de données d'identification (11) de la bobine (5), et apte à transmettre à la machine d'usinage par électroérosion à fil (1) les données lues d'identification (ML),
**caractérisé en ce que** :
- des données embarquées de contrôle (CE) sont également portées sur le support de données d'identification (11),
- le dispositif lecteur de données (13) est également apte à lire les données embarquées de contrôle (CE ) portées par le support de données d'identification (11) de la bobine (5), et à les transmettre à la machine d'usinage par électroérosion à fil (1),
- la machine d'usinage par électroérosion à fil (1) comporte des moyens de mémorisation (17b), dans lesquels sont enregistrés des paramètres spécifiques d'usinage optimisé (PSP) et une fonction de contrôle (F),
- la machine d'usinage par électroérosion à fil (1) comporte des moyens de reconnaissance de fils d'électroérosion, comportant des moyens de calcul (17a) et un programme informatique (P) enregistré comportant une séquence de reconnaissance apte à vérifier si les données lues d'identification (ML) et les données lues de contrôle (CL) sont liées par ladite fonction de contrôle (F),
- la machine d'usinage par électroérosion à fil (1) comporte des moyens de commande (17) et un programme informatique (P) enregistré comportant une séquence de commande apte à provoquer ou autoriser l'usinage en fonction desdits paramètres spécifiques d'usinage optimisé (PSP) si et seulement si les données lues d'identification (ML) et les données lues de contrôle (CL) sont liées par la fonction de contrôle (F).

13. 13 - Dispositif d'usinage par électroérosion selon la revendication 12, **caractérisé en ce que** :
- des paramètres standards d'usinage (PST) sont également enregistrés dans les moyens de mémorisation (17b) de la machine d'électroérosion à fil (1),
- si les données lues d'identification (ML) et les données lues de contrôle (CL) ne sont pas liées par ladite fonction de contrôle (F), la séquence de commande de la machine d'électroérosion à fil (1) provoque ou autorise l'usinage en fonction desdits paramètres standards d'usinage (PST).

14. 14 - Dispositif d'usinage par électroérosion selon l'une des revendications 12 ou 13, **caractérisé en ce que** :
- le support de données d'identification (11) est une radio-étiquette, dans laquelle sont enregistrées sous forme numérique les données embarquées d'identification (ME) et les données embarquées de contrôle (CE),
- le dispositif lecteur de données (13) est un dispositif de communication radiofréquence apte à communiquer avec la radio-étiquette.

15. 15 - Dispositif d'usinage par électroérosion selon l'une quelconque des revendications 12 à 14, **caractérisé en ce que** la fonction de contrôle (F) est une fonction de cryptage à clé privée (K) de cryptage.
